# EUROPEAN PATENT SPECIFICATION

(11) **EP 0 427 311 B1**
(45) Date of publication and mention of the grant of the patent: **18.05.1994**
(21) Application number: 90202809.1
(22) Date of filing: 20.10.1990
(51) Int. Cl.: G09F 3/03, B29C 45/44

(54) **Seals, in particular for garment labels, and mold for said seals**
Siegel, insbesondere für Kleidungsetiketten und Giessform für solche Siegel
Sceaux, en particulier pour étiquettes pour vêtements, et moule pour ces sceaux

(30) Priority: 07.11.1989 IT 2229589
(43) Date of publication of application: 15.05.1991
(73) Proprietor: G.T. S.A.S. DI GIUSEPPE TIBILETTI & C., I-20021 Baranzate di Bollate (Milano) (IT)
(72) Inventor: Tibiletti, Giuseppe, I-20123 Milano (IT)
(74) Representative: Faraggiana, Vittorio, Dr. Ing.

(56) References cited:
- FR-A- 1 237 879
- FR-A- 1 591 249
- FR-A- 2 356 034

## Description

Seals are known, particularly for fastening labels or other objects to garments and consisting of a flexible piece, e.g. a chord, with clips at the two ends to be joined inseparably.

In particular seals are known consisting of a base body from which emerge lengths of thread terminating in inserts or plug type couplings to be inserted in recesses in said body. To provide the inseparable plug type coupling the recesses comprise internal undercuts which by interfering with elastic fins on the inserts prevent withdrawal of said inserts once they are inserted in the seats.

An example of the prior art is given in FR-A-1 591 249.

Generally the base body is provided in two half-shells to be assembled by glueing so as to allow molding with undercuts. Indeed, as may be easily imagined, in the known art the undercuts would prevent withdrawal of the forming boxes from the internal cavities of the base body if the latter were molded in a single piece.

But the necessity of glueing two half-shells to achieve a complete seal involves loss of time and added cost which translates into an increase of the final cost of the seal. In addition the closing operation slows down the production cadences which, without it, could be much higher.

The general object of the present invention is to overcome the above drawbacks and provide a seal and mold therefor which would allow production of a base body in one piece despite the necessary provision of the internal undercuts.

In view of said object it has been sought to provide a seal in accordance with the invention, in particular for garments, comprising a base body and at least one plug type element connected by a length of thread and said plug type element being plugged in a complementary seat having an internal undercut to receive an elastic fin projecting from said plug type element in a direction opposite the direction of insertion thereof into the seat in such a manner as to constitute a block against withdrawal of the plug type element from the seat the seat extending longitudinally in the base body to open at the ends on two opposite walls of the base body with openings, for insertion of plug type elements, characterized in that the openings have an amplitude "Sₐ" less than the internal transverse amplitude "S" of the seat, amplitude "Sₐ" also being greater than "S"/2, the openings of amplitude "Sa" being brought close to opposite sides of the side walls of the seat and each identifying an undercut inside the seat and facing the opposite opening of amplitude "Sa".

It was also sought to provide a mold for molding in a single piece by plastic injection the base body of a seal as described above and characterized in that it comprises an internal cavity having a shape complementary to the external shape of the base body of the seal and in which enter from opposite directions opposite the position corresponding to the openings of amplitude "Sa" two forming boxes, each of maximum transverse amplitude equal to "Sa" of the base body and each forming box having a form of the seat without the undercut corresponding to its own inlet opening of amplitude "Sa" and having part of the head shaped to form the undercut of the opposite opening.

To further clarify the explanation of the innovative principles of the present invention and its advantages as compared with the known art there is described below with the help of the annexed drawings a possible embodiment as an example of application of said principles. In the drawings:-
FIG. 1 shows a schematic view of a seal molded in accordance with the innovative principles claimed herewith,
FIG. 2 shows a partial cross section of the seal of FIG. 1 in partial closing position,
FIG. 3 shows a partial side view of a possible conformation of parts of the graft type element of the seal of FIG. 2,
FIG. 4 shows a schematic plan view of an open mold provided in accordance with the invention and with a seal molded therein partially sectioned and forming boxes partially withdrawn,
FIG. 5 shows a partially cross sectioned view along plane of cut V-V of FIG. 4,
FIG. 6 shows a plan view similar to FIG. 4 but without a seal and with forming boxes in the molding position,
FIG. 7 shows a partial cross sectioned view along plane of cut VII-VIII of FIG. 6, and
FIG. 8 shows a schematic view of a second and different seal molded in accordance with the innovative principles claimed here.

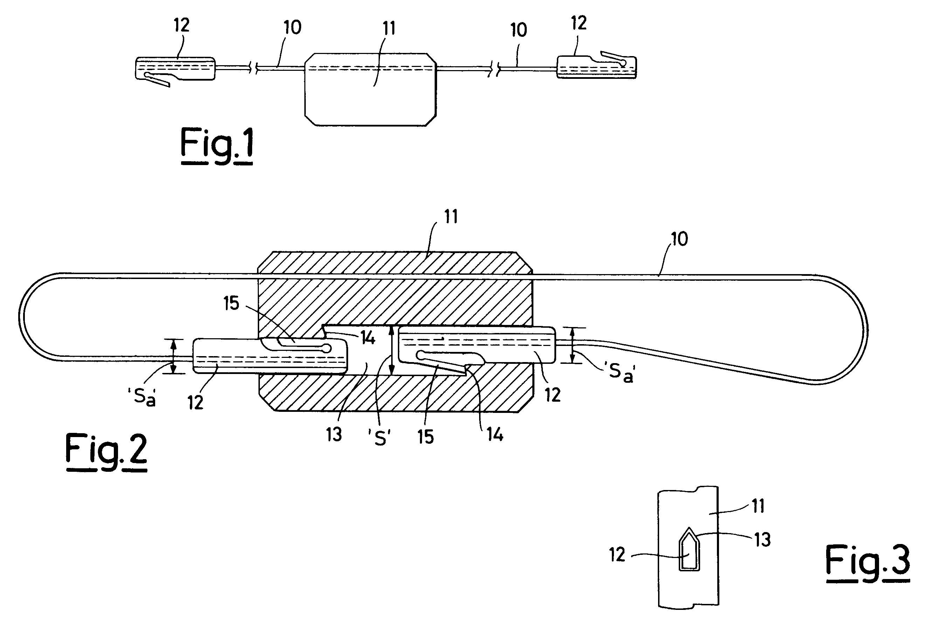

With reference to the figures FIG. 1 shows an example of an embodiment of a seal applying the innovative principles here claimed. Said seal comprises a base body 11 and graft type elements 12 interconnected by lengths of thread 10.

FIG. 2 shows a cross section of a seal with corresponding graft type elements 12 inserted in the seats designed to receive them in the base body 11.

As may be seen in the figure the body 11 contains a seat 13 of amplitude "S" with openings on opposite sides of said body of amplitude "Sₐ" smaller than amplitude "S" but greater than "S"/2. Said openings are arranged near opposite sides of the side walls of the seat so as to identify two teeth 14 complementary to yielding fins 15 in the plug type elements 12 and each arranged in front of the opposite opening in the seat. As a whole the seat 13 between the two openings thus assumes a generally "Z" form.

Upon insertion of a plug type element in the seat 13 the fin 15 bends against the body of the plug type element and allows penetration thereof in the body (as shown with the plug type element on the left in the drawing) until it passes the tooth 14 so as to snap outward (as shown on the right in the drawing) and prevent subsequent withdrawal.

To avoid errors in the direction of insertion of the plug type element and hence failure of the fin to engage with the associated tooth, the cross secton thereof may be provided with a shape complementary to the seat in the body 11 and irreversible, i.e. it can be inserted in the seat only in such a manner that the fin is faced by the tooth 14.

To achieve this it is enough that two opposite side walls of the plug type element be formed asymmetrically as shown for example in FIG. 3.

Since the seat 13 is completely closed by the insertion of opposing plug type elements 12 the seal assuredly cannot be opened without breaking it since it is impossible otherwise to reach the fins 15 to bend them outward from the undercuts.

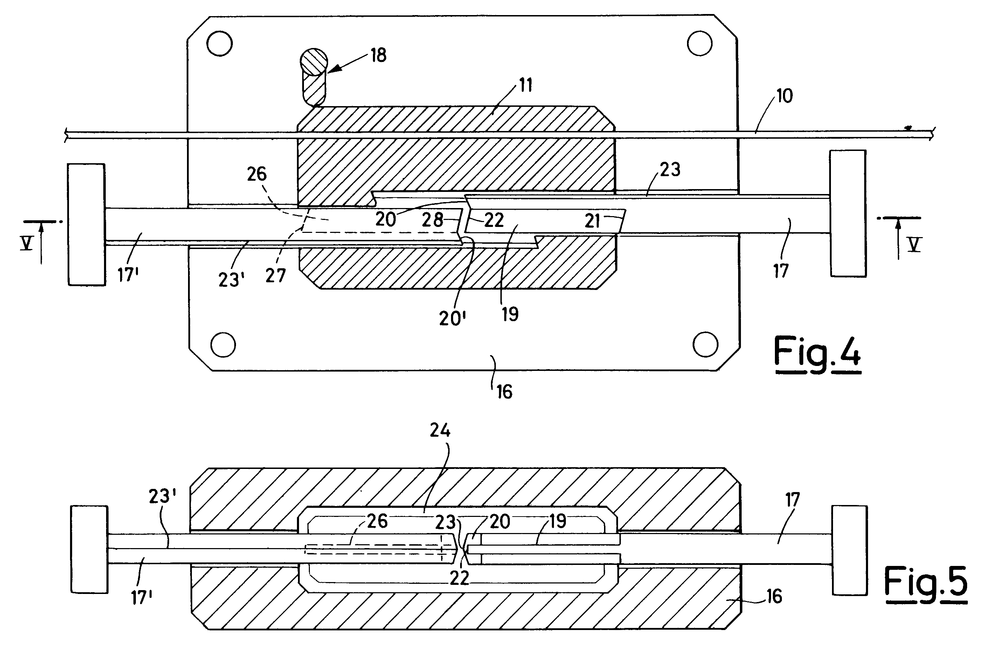

In accordance with the invention, thanks to the peculiar form of the seat 13 it is possble to mold the body 11 in one piece by means of a box type mold as shown in FIGS. 4-7.

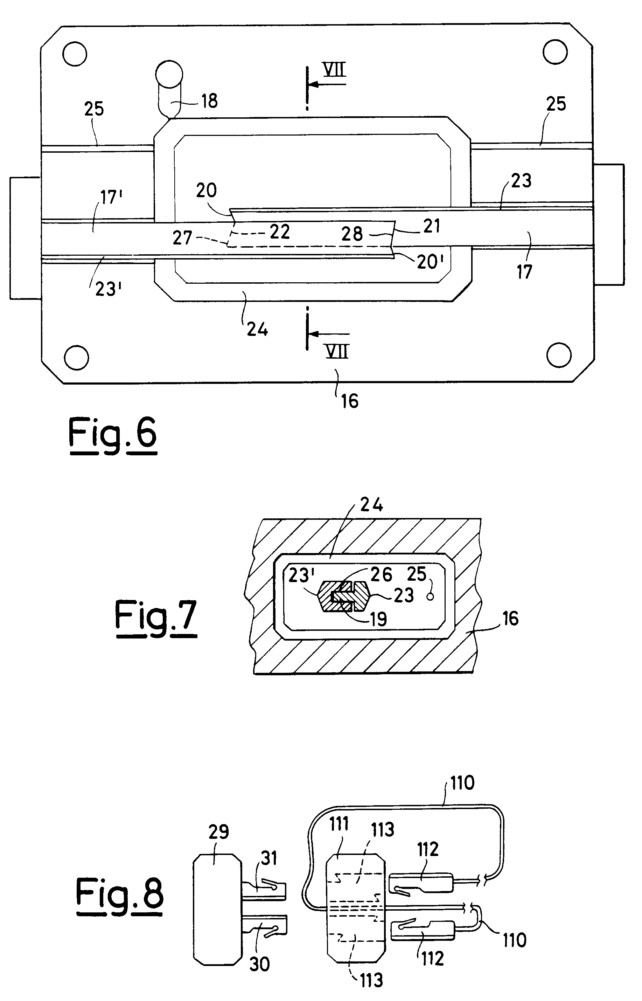

Said mold consists of a matrix mold (shown open in FIG. 6) with the form 24 of the body of the clip reached by the two seats 25 for the thread 10 and a riser pipe 18 by injection of plastic and two sliding boxes 17 and 17′ transversely offset. As may be seen in FIGS. 4 and 5 the boxes 17 and 17′ have virtually constant transverse dimensions to allow their withdrawal after molding of the seal. Each box 17, 17′ has a skewed head part 20, 20′ respectively to form the teeth 14. To prevent moving of the box ends upon the entrance of the plstic into the mold there are provided guides and reciprocal rabbets thereon. In particular the box 17 has a longitudinal part with reduced cross section 19 which slides into a complementary groove 26 arranged longitudinally in the box 17′. In addition, to prevent side deviations the lowered part 19 terminates at the head end of the box with a skewed surface 22 to abut against the skewed end part 27 of the groove 26 and the head part of the box 17 at the sides of the groove 26 also ends with a skewed surface 28 to abut against a corresponding skewed surface 21 at the end of the lowered part 19.

In this manner upon closing of the boxes in the molding position as shown in FIG. 6 there is achieved a solid positioning of the ends of the boxes which support each other.

At this point it is clear how in accordance with the principles inspiring the present invention it is possible to mold a seal body in a single piece with undercuts inside for the inserts. The undercut for an insert is achieved by the box which forms the entrance seat for the other insert and vice versa. In this manner it is possible to provide the boxes with virtually constant cross sections (or in any case not increasing between the base and the box head) and hence easily strippable after molding.

FIG. 8 shows another possible embodiment of a seal applying the innovative principles of the present invention. Elements having the same function as the above embodiment are indicated by the same reference numbers increased by one hundred.

The base body 111 has two seats 113 and 113′ provided like the seats 13 of the embodiment described above and parallel so that there can be inserted from one side of the base body two inserts 112 connected thereto by a thread 110.

A plate element 29 has plug type projections 30 and 31 having a shape similar to that of the inserts 112 to be plugged in the seats 113 on the side opposite the side where the inserts 112 are inserted. Said plate element 29 in addition to closing access to the seats 113 from the opposite side of the inserts and hence preventing tampering with the seal by pressure on the insert fins also makes it easy for example to customize the seals even after application to the garments. Indeed the plate 29 can be provided in various colours or on its surface can be glued self-adhesives or directly printed various indications such as trademarks, logos, dates of production of the sealed product, etc.

The mold necessary for production of the seal shown in FIG. 8 is not shown as it is readily imaginable by those skilled in the art as a derivation from the mold of FIGS. 4-7 with the mere addition of two other boxes and changing of the dimensions of the mold.

Naturally the description of an embodiment in accordance with the invention is given here merely as an example and is therefore not to be understood as limiting the scope of the invention here claimed.

For example the shaping of the inserts to prevent their insertion backward can be provided not only as shown in FIG. 3 but also more generally with appropriate variations of the thickness arranged tranversely to the extension of the insert as may readily be imagined by those skilled in the art.

There can also be imagined a seal in accordance with the invention with a single insert connected by a thread to the base body and hence to the other opening in the seat closed for example by a plug type coupling projecting from a plate as shown in FIG. 8 but with a single plug type element.

The proportions of the various parts of the seals can also be varied.

Finally the coupling between the two boxes to prevent sidewards movements upon injection of the plastic in the mold can be achieved in another form or be omitted entirely if the size of the seal and hence of the boxes is such as to give them the necessayr rigidity to prevent said lateral deviations.

## Claims

1. Seal, in particular for garments, comprising a base body (11) and at least one plug type element (12) and connected by a length of thread (10), the plug type element (12) coupling with a complementary seat (13) having an internal undercut (14) to receive an elastic fin (15) projecting from said plug type element (12) in a direction opposite the direction of insertion thereof in the seat (13) in such a manner as to constitute a block against withdrawal of the plug type element (12) from the seat (13), the seat (13) extending longitudinally in the base body (11) to open at the ends into two opposite walls of the base body (11) with openings for the insertion of plug type elements (12), characterized in that the openings have an amplitude "Sₐ" smaller than the transverse internal amplitude "S" of the seat, amplitude "Sₐ" being also greater than "S"/2 and the openings of amplitude "Sₐ" being brought near opposite sides of the side walls of the seat (13) and each identifying an undercut (14) inside the seat (13) and faced by the opposite opening of amplitude "Sₐ".

2. Seal in accordance with claim 1 characterized in that each undercut (14) has an inclined surface to form a tooth with a slope opposite that of the fin (15) of the plug type coupling (12).

3. Seal in accordance with claim 1 characterized in that the seats (13) are two in number arranged parallel for insertion from the came side of the base body (11) of two plug type couplings (12) and from the opposite side of two other inserts (30, 31) in a form similar to that of the plug type elements (112) and projection from and integral with a plate element (29).

4. Seal in accordance with claim 1 characterized in that the plug type elements (12) have a transverse variation in the thickness complementary to a transverse variation in the thickness of the seat (13) in such a manner as to provide irreversibility of the direction of insertion for the plug type elements (12) in the seat (13).

5. Mold for production in one piece by plastic injection of the base body (11) of a seal as claimed in claim 1 characterized in that it comprises an internal cavity (24) with a shape complementary to the external shape of the base body (11) of the seal and in which there enter from opposite directions opposite the position corresponding to the openings of amplitude "Sₐ" of the base body (11) two forming boxes (17, 17') each of which has a maximum transverse amplitude equal to "Sₐ" and each formig box (17, 17') having a form of the seats without the undercut (14) corresponding to its own opening of amplitude "Sₐ" at the entrance and having a head part (20, 20') shaped to form the undercut (14) of the opposite opening.

6. Mold in accordance with claim 5 characterized in that the two boxes (17, 17') comprise reciprocal guide (19, 26) and positioning (21, 22, 27, 28) means.

7. Mold in accordance with claim 6 characterized in that, upon insertion of the boxes (17, 17') in the mold, the mutual guide (19, 26) and positioning means (21, 22, 27, 28) have in one box a longitudinal part with reduced cross section inserted in a sliding manner in a complementary longitudinal groove in the other box.

8. Mold in accordance with claim 6 characterized in that, upon complete insertion of the boxes (17, 17'), the mutual guide and positioning means comprise for each box head parts (21, 22) of the box skewed in relation to the longitudinal extension (19) thereof and abutted against corresponding skewed surfaces (27, 28) made in the other box in such a manner as to constitute supporting surfaces resisting lateral deviation forces of the ends of the boxes.

## Patentansprüche

1. Siegel, insbesondere für Kleidungsstücke, bestehend aus einem Grundkörper (11) und mindestens einem durch einen Fadenabschnitt (10) verbundenen Steckelement (12), wobei das Steckelement (12) in eine komplementäre Aufnahme (13) mit einer inneren Hinterschneidung (14) zur Aufnahme einer elastischen Zunge (15) einsteckbar ist, die vom Steckelement (12) in zur Einsteckrichtung desselben in die Aufnahme (13) entgegengesetzter Richtung vorsteht, um eine Arretierung gegen Wiederauszug des Steckelementes (12) aus der Aufnahme (13) zu bilden, wobei die Aufnahme (13) sich im Grundkörper (11) in Längsrichtung erstreckt, um sich an den Enden an zwei gegenüberliegenden Wänden des Grundkörpers (11) mit Einstecköffnungen von Steckelementen (12) zu öffnen, dadurch gekennzeichnet, daß die Öffnungen eine Weite "Sa" besitzen, die kleiner als die innere Querweite "S" der Aufnahme ist, wobei die Weite "Sa" überdies größer als "S"/2 ist und die Öffnungen der Weite "Sa" an entgegengesetzten Seiten der Seitenwände der Aufnahme (13) angesetzt sind, wobei jede Öffnung eine gegenüber der Aufnahme (13) innen liegende Hinterschneidung (14) festlegt, die der entgegengesetzten Öffnung der Weite "Sa" gegenüberliegt.

2. Siegel nach Anspruch 1, dadurch gekennzeichnet, daß jede Hinterschneidung (14) eine Schrägfläche aufweist, die eine Nase mit einem der Zunge (15) der Steckkupplung (12) entgegengesetzten Verlauf aufweist.

3. Siegel nach Anspruch 1, dadurch gekennzeichnet, daß zwei Aufnahmen (13) vorgesehen sind, die zur Einführung von derselben Seite des Grundkörpers (11) von zwei Steckkupplungen (12) und auf der entgegengesetzten Seite von zwei weiteren Einsätzen (30, 31) parallel angeordnet sind, die eine jener der Steckelemente (12) ähnliche Form aufweisen und von einem laschenförmigen Element (29) vorstehen, an dem sie festliegen.

4. Siegel nach Anspruch 1, dadurch gekennzeichnet, daß die Steckelemente (12) eine Queränderung der Dicke aufweisen, die zu einer Queränderung der Dicke in der Aufnahme (13) komplementär ist, um eine Unumkehrbarkeit zur Einführrichtung der Steckelemente (12) in die Aufnahme (13) zu verwirklichen.

5. Gußform zur Ausführung in einem einzigen Teil durch Spritzgießen des Grundkörpers (11) eines Siegels, nach Anspruch 1, dadurch gekennzeichnet, daß sie eine Innenausnehmung (24) aufweist, die komplementär zur Außenform des Grundkörpers (11) des Siegels ausgebildet ist, in welcher von entgegengesetzten Richtungen, der Stellung im Bereich der Öffnungen der Weite "Sa" des Grundkörpers (11) abgewandt, zwei Formschieber (17, 17') eingreifen, von denen jeder die Höchstquerweite gleich "Sa" aufweisen und jeder Formschieber (17, 17') eine der eigenen Öffnung der Eintrittsweite "Sa" entsprechende Ausbildung der Aufnahmen ohne die Hinterschneidung (14) und einen Kopfabschnitt (20, 20') aufweist, der ein Profil zur Ausbildung der Hinterschneidung (14) der entgegengesetzten Öffnung aufweist.

6. Gußform nach Anspruch 5, dadurch gekennzeichnet, daß die beiden Formschieber (17, 17') Führungs- (19, 26) und gegenseitige Positioniermittel (21, 22, 27, 28) umfassen.

7. Gußform nach Anspruch 6, dadurch gekennzeichnet, daß die Führungs- (19, 26) und die gegenseitigen Positioniermittel (21, 22, 27, 28) in einem Schieber einen einen verkleinerten Querschnitt aufweisenden Längsteil umfassen, der bei Einführung der Schieber in die Gußform in einer komplementären im anderen Schieber in Längsrichtung angeordneten Nut gleitbar eingebracht ist.

8. Gußform nach Anspruch 6, dadurch gekennzeichnet, daß die Führungs- und gegenseitigen Positioniermittel für jeden Schieber Kopfteile (21, 22) des Schiebers aufweisen, die gegenüber der Längserstreckung desselben schräg angeordnet sind und bei vollständiger Einführung der Schieber (17, 17') auf entsprechenden Schrägflächen (27, 28) anschlagen, die im anderen Schieber vorgesehen sind, um Auflageebenen zu bilden, die seitlichen Abweichkräften der Enden der Schieber entgegenwirken.

## Revendications

1. Sceau, en particulier pour vêtements, comprenant un corps de base (11) et au moins un élément (12) du type formant emboîtement, relié par une portion de fil (10), l'élément (12) d'emboîtement étant couplé à un siège de forme conjuguée (13) ayant une encoche intérieure en contre-dépouille (14) destinée à recevoir une aile élastique (15) faisant saillie dudit élément (12) d'emboîtement dans une direction opposée à sa direction d'introduction dans le siège (13), de manière à former un obstacle à l'enlèvement de l'élément (12) d'emboîtement du siège (13), le siège (13) s'étendant longitudinalement dans le corps de base (11) et débouchant aux extrémités sur deux parois opposées du corps de base (11) à travers des ouvertures pour l'introduction de l'élément d'emboîtement (12), caractérisé en ce que les ouvertures ont une largeur "Sa" plus petite que la largeur transversale intérieure "S" du siège, la largeur "Sa" étant également supérieure à "S"/2 et les ouvertures de largeur "Sa" étant rapprochées à des côtés opposés des parois latérales du siège (13) et chacune définissant une encoche en contre-dépouille (14) à l'intérieur du siège (13) et en regard de l'ouverture opposée de largeur "Sa".

2. Sceau selon la revendication 1, caractérisé en ce que chaque encoche en contre-dépouille (14) a une surface inclinée à former une dent dont l'inclinaison est à l'opposé de celle de l'aile (15) de l'élément d'emboîtement (12).

3. Sceau selon la revendication 1, caractérisé en ce que les sièges (13) sont prévus en nombre de deux et sont disposés parallèles pour l'introduction, à partir du même côté du corps de base (11), de deux éléments d'emboîtement (12) et, à partir du côté opposé, de deux autres pièces insérées (30, 31) de forme similaire à celle des éléments (12) d'emboîtement et faisant saillie d'un élément formant plaque (29) duquel elles sont solidaires.

4. Sceau selon la revendication 1, caractérisé en ce que les éléments (12) d'emboîtement ont une variation transversale d'épaisseur complémentaire d'une variation transversale d'épaisseur prévue dans le siège (13), de manière à rendre irréversible la direction d'introduction des éléments (12) d'emboîtement dans le siège (13).

5. Moule pour la production, d'un seul tenant et par injection plastique, du corps de base (11) d'un sceau selon la revendication 1, caractérisé en ce qu'il comporte une cavité interne (24) dont la forme épouse celle externe du corps de base (11) du sceau et dans laquelle entrent à partir de directions opposées, en correspondance des ouvertures de largeur "Sa" du corps de base (11), deux tiroirs de formage (17, 17') chacun desquels a une largeur transversale maximum égale à "Sa" et chaque tiroir de formage (17, 17') ayant la forme des sièges sans l'encoche en contre-dépouille (14) correspondant à sa propre ouverture de largeur "Sa" à l'entrée et ayant une portion de tête (20, 20') conformée de manière à former l'encoche en contre-dépouille (14) de l'ouverture opposée.

6. Moule selon la revendication 5, caractérisé en ce que les deux tiroirs (17, 17') comportent des moyens de guidage (19, 26) et de positionnement (21, 22, 27, 28) réciproque.

7. Moule selon la revendication 6, caractérisé en ce que les moyens de guidage (19, 26) et de positionnement réciproque (21, 22, 27, 28) ont dans un des tiroirs une portion longitudinale de section réduite qui, lors de l'introduction des tiroirs (17, 17') dans le moule, est introduite de manière coulissante dans une rainure de forme conjuguée disposée longitudinalement dans l'autre tiroir.

8. Moule selon la revendication 6, caractérisé en ce que les moyens de guidage et de positionnement réciproque comportent, pour chaque tiroir, des parties de tête (21, 22) du tiroir obliques par rapport à l'extension longitudinale (19) du même tiroir lesquelles, lors de l'insertion complète des tiroirs (17, 17'), viennent buter contre des surfaces obliques correspondantes (27, 28) formées dans l'autre tiroir de manière à former des surfaces de support resistant à des forces d'écartement latéral des extrémités des tiroirs.
